# EUROPÄISCHE PATENTSCHRIFT

(11) **EP 1 259 350 B1**
(45) Veröffentlichungstag und Bekanntmachung des Hinweises auf die Patenterteilung: **29.11.2006**
(21) Anmeldenummer: 01919294.7
(22) Anmeldetag: 17.02.2001
(51) Int. Cl.: B23B 31/11

(54) **REIBWERKZEUG MIT FÜHRUNGSSCHAFT**
REAMING TOOL WITH A GUIDE SHANK
OUTIL DE FROTTEMENT AVEC TIGE DE GUIDAGE

(30) Priorität: 01.03.2000 DE 10009728
(43) Veröffentlichungstag der Anmeldung: 27.11.2002
(73) Patentinhaber: Dihart AG, CH-4657 Dulliken (CH)
(72) Erfinder: BÜTTIKER, Otto, CH-4617 Gunzgen (CH); CHRISTOFFEL, John, CH-5073 Gipf-Oberfrick (CH); EIGENMANN, Roman, CH-4665 Oftringen (CH)
(74) Vertreter: Wolf, Eckhard
(86) Internationale Anmeldenummer: PCT/EP2001/001772
(87) Internationale Veröffentlichungsnummer: WO 2001/064378

(56) Entgegenhaltungen:
- EP-A- 0 294 348
- DE-A- 3 905 132
- DE-A- 4 210 144
- DE-A- 19 518 241

## Beschreibung

Die Erfindung betrifft ein Reibwerkzeug zum Ausreiben von mehreren in axialem Abstand voneinander angeordneten koaxialen Bohrungen eines Werkstücks mit einem in eine Maschinenspindel einspannbaren, in vorbearbeiteten Bohrungen des zu bearbeitenden Werkstücks und/oder in einer Führungsbüchse mittels außenseitiger Abstützelemente abstützbaren Führungsschaft und mit einem an dessen stimseitigem Ende koaxial anschließenden, mit Schneiden und gegebenenfalls zusätzlichen Abstützelementen versehenen Reibkopf.

Zum Fertigreiben von Nockenwellen- und Kurbelwellenlagerbohrungen ist zur Erzielung der geforderten Flucht ein Reibwerkzeug mit langem Führungsschaft erforderlich, der in den vorgefertigten Bohrungen abgestützt wird. Bei bekannten Reibwerkzeugen dieser Art ist der Reibkopf einstückig mit dem Führungsschaft verbunden. Nachteilig ist dort, daß das Nacharbeiten der Schneiden relativ aufwendig ist. Wenn die Schneiden verschlissen sind, muß das gesamte Werkzeug an der Maschine ausgewechselt werden.

Ausgehend hiervon liegt der Erfindung die Aufgabe zugrunde, ein Reibwerkzeug mit Führungsschaft der eingangs angegebenen Art zu entwickeln, das im Verschleißfalle einen einfachen Wechsel erlaubt.

Zur Lösung dieser Aufgabe werden die im Anspruch 1 angegebenen Merkmale vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, daß der Reibkopf mittels eines selbstzentrierenden Spannmechanismus mit dem Führungsschaft verbindbar ist und daß die in der Nähe des Spannmechanismus positionierten Abstützelemente beim Spannvorgang zumindest partiell von einem Durchmesseruntermaß auf ein vorgegebenes Durchmesserführungsmaß radial aufweitbar sind. Um dies zu ermöglichen, wird gemäß einer ersten Ausführungsvariante der Erfindung vorgeschlagen, daß der selbstzentrierende Spannmechanismus eine im Führungsschaft konzentrisch angeordnete, durch eine ringförmige Planfläche begrenzte Kegelaufnahme und einen rückwärtig über den Reibkopf koaxial überstehenden, durch eine ringförmige Planfläche begrenzten und in die Kegelaufnahme einsteckbaren Kegelzapfen sowie eine vom Reibkopf aus in ein koaxiales Innengewinde des Führungsschafts eindrehbare Spannschraube aufweist, wobei der Reibkopf und der Führungsschaft im Bereich ihrer Plan- und Stimflächen im unverspannten Zustand ein definiertes Lehrenabstandsmaß begrenzen und im verspannten Zustand unter elastischer Aufweitung der Kegelaufnahme und der in diesem Bereich außenseitig angeordneten Abstützelemente auf Führungsmaß gegeneinander anliegen. Die Drehmitnahme zwischen dem Führungsschaft einerseits und dem Reibkopf andererseits wird wesentlich verbessert, wenn der Führungsschaft zwischen Kegelaufnahme und ringförmiger Stimfläche einen Innensechskant aufweist, während der Reibkopf einen zwischen dem Kegelzapfen und der ringförmigen Planfläche angeordneten, zum Innensechskant komplementären Außensechskant aufweist.

Gemäß einer zweiten Ausführungsvariante der Erfindung wird im Sinne einer kinematischen Umkehrung zur ersten Ausführungsvariante vorgeschlagen, daß der selbstzentrierende Spannmechanismus eine im Reibkopf konzentrisch angeordnete, durch eine ringförmige Planfläche begrenzte Kegelaufnahme, einen nach vorne über den Führungsschaft koaxial überstehenden, durch eine ringförmige Planfläche begrenzten und in die Kegelaufnahme einsteckbaren Kegelzapfen sowie eine vom Reibkopf aus in ein koaxiales Innengewinde des Führungsschafts eindrehbare Spannschraube aufweist, wobei der Reibkopf und der Führungsschaft im Bereich ihrer Planflächen im unverspannten Zustand ein definiertes Lehrenabstandsmaß begrenzen und im gespannten Zustand unter elastischer Aufweitung der Kegelaufnahme und der in diesem Bereich außenseitig angeordneten Abstützelemente auf Führungsmaß gegeneinander anliegen. Die Drehmitnahme zwischen dem Führungsschaft einerseits und dem Reibkopf andererseits erfolgt in diesem Fall zweckmäßig dadurch, daß der Reibkopf einen zwischen Kegelaufnahme und ringförmiger Planfläche angeordneten Innensechskant aufweist, während der Führungsschaft einen zwischen dem Kegelzapfen und der ringförmigen Planfläche angeordneten, zum Innensechskant komplementären Außensechskant aufweist.

Die Spannschraube ist zweckmäßig als in gegenläufige Innengewinde des Reibkopfs und des Führungsschafts eingedrehte Differentialschraube ausgebildet.

Untersuchungen haben gezeigt, daß das optimale Lehrenabstandsmaß zwischen 0,01 bis 0,06 mm, vorzugsweise 0,02 bis 0,04 mm liegt, während der Kegelwinkel des Kegelzapfens und der Kegelaufnahme 8° bis 16° betragen sollte. Um Verwerfungen im Bereich der Plananlage zu vermeiden, ist es wichtig, daß die Spannschraube im Spannzustand mit einem Anzugmoment von D = X + d verspannt ist, wobei X das Anzugmoment im Augenblick des Anschlags der Planflächen ist und d ein Zusatzdrehmoment zur Erzeugung eines Kraftschlusses in der Größenordnung von 0,4 bis 4 Nm bedeutet.

Die Abstützelemente sind vorteilhafterweise als Führungsleisten ausgebildet. Eine bevorzugte Ausgestaltung der Erfindung sieht vor, daß der Reibkopf mehrere, vorzugsweise vier bis sechs über den Umfang vorzugsweise mit ungleicher Teilung verteilt angeordnete Schneiden und der Führungsschaft eine entsprechende Anzahl über den Umfang verteilt angeordnete, achsparallel verlaufende Führungsleisten aufweist, wobei die Führungsleisten in Umfangsrichtung jeweils versetzt gegen die räumlich zugeordneten Schneiden angeordnet sind. Mit diesen Maßnahmen läßt sich eine hohe Oberflächengüte in den zu bearbeitenden Bohrungen erzielen. Eine weitere Verbesserung in dieser Hinsicht wird dadurch erzielt, daß die reibkopfseitige Planfläche und die schaftseitige Planfläche in Umfangsrichtung ununterbrochen sind, daß in diesem Bereich also keine Quemuten oder Querbolzen angeordnet sind.

Ein bevorzugtes Verfahren zur Herstellung eines Führungsschafts für die erfindungsgemäßen Reibwerkzeuge gemäß der ersten Ausführungsvariante sieht vor, daß der vorgefertigte, mit Abstützelementen oder Führungsleisten und mit einer stimseitigen Kegelaufnahme versehene Führungsschaft auf einen mit einem Kegelzapfen und einer den Kegelzapfen ringförmig begrenzenden Planfläche versehenen Schleifdom aufgesteckt und mittels eines zentralen Spannmechanismus unter partieller radialer Aufweitung der schaftseitigen Abstützelemente oder Führungsleisten auf diesen aufgespannt und anschließend unter Einstellung eines vorgegebenen Durchmesserführungsmaßes überschliffen und wieder vom Schleifdom abgenommen wird. Der zu überschleifende Führungsschaft wird unter Einhaltung eines vorgegebenen Lehrenabstandsmaßes von vorzugsweise 0,01 bis 0,06 mm auf den Kegelzapfen des Schleifdoms aufgesteckt und bis zum Anschlag mit definierter Spannkraft gegen dessen Planfläche angezogen. Hierzu wird der Führungsschaft vorteilhafterweise mit einer Differentialschraube mit definiertem Anzugmoment auf den Kegelzapfen des Schleifdoms aufgespannt.

Alternativ dazu wird zur Herstellung eines Reibkopfs für die erfindungsgemäßen Reibwerkzeuge gemäß der zweiten Ausführungsvariante vorgeschlagen, daß der vorgefertigte, mit Abstützelementen oder Führungsleisten und mit einer rückwärtigen Kegelaufnahme versehene Reibkopf auf einen mit einem Kegelzapfen und einer den Kegelzapfen ringförmig begrenzenden Planfläche versehenen Schleifdom aufgesteckt und mittels eines zentralen Spannmechanismus unter partieller radialer Aufweitung der reibkopfseitigen Abstützelemente oder Führungsleisten auf diesen aufgespannt und anschließend unter Einstellung eines vorgegebenen Durchmesserführungsmaßes überschliffen und wieder vom Schleifdorn abgenommen wird. Der zu überschleifende Reibkopf wird dabei zweckmäßig unter Einhaltung eines vorgegebenen Lehrenabstandsmaßes von vorzugsweise 0,01 bis 0,06 mm auf den Kegelzapfen des Schleifdoms aufgesteckt und bis zum Anschlag mit definierter Spannkraft gegen dessen Planfläche angezogen. Hierzu wird der Reibkopf vorteilhafterweise mit einer Differentialschraube mit definiertem Anzugmoment auf den Kegelzapfen des Schleifdorns aufgespannt. Die beste Wiederholgenauigkeit wird erzielt, wenn die Differentialschraube beim Spannvorgang mit einem Anzugmoment D = X + d verspannt wird, wobei X das Anzugmoment im Augenblick des Anschlags der Planflächen ist und d ein Zusatzdrehmoment zur Erzeugung eines Kraftschlusses von 0,4 bis 4 Nm bedeutet.

Im folgenden wird die Erfindung anhand der in der Zeichnung in schematischer Weise dargestellten Ausführungsbeispiele näher erläutert. Es zeigen
- Fig. 1: eine Anordnung zum Aufbohren einer Nockenwellengassenbohrung mit einem Reibwerkzeug mit langem, in den vorbearbeiteten Bohrungen abstützbaren Führungsschaft;
- Fig. 2: einen Ausschnitt aus dem Reibwerkzeug im Bereich der Kupplung zwischen Reibkopf und Führungsschaft in einem Längsschnitt;
- Fig. 3: einen Ausschnitt aus dem Reibwerkzeug im Bereich der gegenüber Fig. 2 abgewandelten Kupplung zwischen Reibkopf und Führungsschaft in einem Längsschnitt.

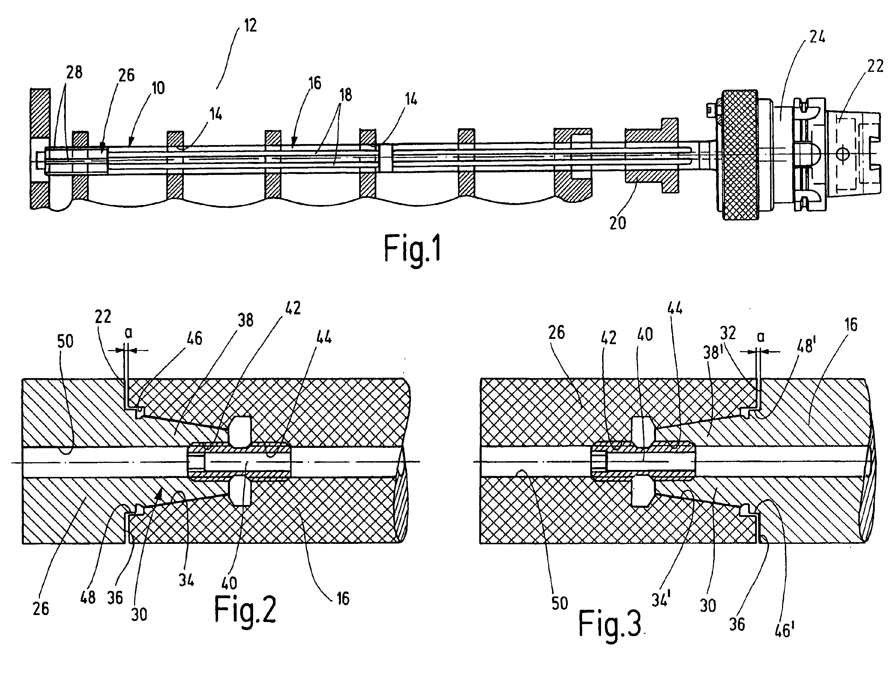

Das in Fig. 1 gezeigte Reibwerkzeug 10 ist zum Fertigreiben von an einem Zylinderkopf 12 in axialem Abstand voneinander angeordneten, miteinander fluchtenden Nockenwellenlagerbohrungen 14 bestimmt. Zur Erzielung der geforderten Flucht weist das Reibwerkzeug 10 einen langen Führungsschaft 16 auf, der sich mittels achsparallel ausgerichteter und über den Umfang des Führungsschafts 16 verteilt angeordneter Führungsleisten 18 in den jeweils vorgefertigten Bohrungen 14 und gegebenenfalls in einer maschinenfest angeordneten Führungsbüchse 20 abstützt. An seinem maschinenseitigen Ende ist der Führungsschaft 16 mit einem Spannschaft 22 für den Anschluß an eine nicht dargestellte Maschinenspindel versehen, der bei dem gezeigten Ausführungsbeispiel als Hohlschaftkegel ausgebildet ist. Außerdem befindet sich dort ein Ausgleichshalter 24, mit dem Fluchtdifferenzen ausgeglichen werden können.

An seinem stimseitigen Ende trägt der Führungsschaft 16 einen Reibkopf 26, der mit mehreren, in Umfangsrichtung einen Abstand voneinander aufweisenden Schneiden 28 bestückt ist. Die Schneiden 28 haben an ihrem dem Schaft zugewandten Ende eine Führungsfunktion. Grundsätzlich ist es möglich, daß die Schneiden 28 an ihrem schaftseitigen Ende noch im Bereich des Schneidkopfs in Führungsleisten übergehen. Der Reibkopf 26 ist als vom Führungsschaft 16 getrenntes Bauteil ausgebildet. Wie aus den Fig. 2 und 3 zu ersehen ist, ist der Reibkopf 26 mittels eines selbstzentrierenden Spannmechanismus mit dem Führungsschaft 16 verbindbar. Da beim Spannvorgang im Bereich des Spannmechanismus eine Vorspannung erzeugt wird, die zu einer elastischen Verformung führt, ist es wegen der hohen Genauigkeitsanforderung wichtig, daß die in der Nähe des Spannmechanismus positionierten Abstützelemente beim Spannvorgang zumindest partiell von einem Durchmesseruntermaß auf ein vorgegebenes Durchmesserführungsmaß radial aufweitbar sind.

Bei dem in Fig. 2 gezeigten Ausführungsbeispiel weist der selbstzentrierende Spannmechanismus 30 eine im Führungsschaft 16 konzentrisch angeordnete, durch eine ringförmige Planfläche 32 begrenzte Kegelaufnahme 34, einen rückwärtig über den Reibkopf 26 koaxial überstehenden, durch eine ringförmige Planfläche 36 begrenzten und in die Kegelaufnahme 34 einsteckbaren Kegelzapfen 38 sowie eine Spannschraube 40 auf, die als in gegenläufige Innengewinde 42,44 des Reibkopfs 26 und des Führungsschafts 16 eingedrehte Differentialschraube ausgebildet ist. Für die Drehmitnahme weist der Führungsschaft 16 einen zwischen Kegelaufnahme 34 und ringförmiger Planfläche 32 angeordneten Innensechskant 46 auf, während der Reibkopf 26 einen zwischen Kegelzapfen 38 und ringförmiger Planfläche 36 angeordneten, zum Innensechskant 46 komplementären Außensechskant 48 aufweist.

Der in Fig. 3 gezeigte Spannmechanismus unterscheidet sich von dem Spannmechanismus nach Fig. 2 lediglich dadurch, daß die Kegelaufnahme 34' rückwärtig am Reibkopf 26 und der Kegelzapfen 38' stimseitig überstehend am Führungsschaft 16 angeordnet sind. Entsprechend ist hier der Innensechskant 46' am Reibkopf und der Außensechskant 48' am Führungsschaft 16 angeordnet. In beiden Fällen wird beim Spannvorgang die Spannschraube 40 von der Stirnseite des Reibkopfes 26 aus durch dessen Bohrung 50 hindurch betätigt.

Der Reibkopf 26 und der Führungsschaft 16 begrenzen im Bereich ihrer Planflächen 32,36 im unverspannten Zustand ein definiertes Lehrenabstandsmaß a von vorzugsweise 0,01 bis 0,06 mm, während sie im gespannten Zustand unter elastischer Aufweitung der Kegelaufnahme 34,34' und der in diesem Bereich außenseitig angeordneten Führungsleisten 18 auf ein vorgegebenes Führungsmaß gegeneinander anliegen. Der Kegelwinkel des Kegelzapfens 38,38' und der Kegelaufnahme 34,34' beträgt bei dem gezeigten Ausführungsbeispiel ca. 12°. Um eine hohe Wiederholgenauigkeit im Führungsdurchmesser zu gewährleisten, hat es sich als besonders wichtig erwiesen, daß die Spannschraube 40 immer mit dem gleichen Anzugmoment angezogen wird. Das Anzugmoment hängt dabei vom Reibungsverhalten der Verbindungspartner und vom konkreten Lehrenabstandsmaß a ab. Zur Überwindung des Lehrenabstandsmaßes bis zum Anschlag zwischen den Planflächen wird ein Anzugmoment X benötigt. Hinzu kommt ein Zusatzdrehmoment d zur Erzeugung eines Kraftschlusses aufgrund einer internen elastischen Verformung. Das Anzugmoment D ergibt sich demnach zu X + d. Dabei beträgt d = 0,4 bis 4 Nm, während das Anzugmoment X in Abhängigkeit vom Lehrenabstandsmaß a 3 bis 16 Nm betragen kann.

Um immer den gleichen Führungsdurchmesser zu erhalten, ist es von besonderer Wichtigkeit, daß im Falle des Ausführungsbeispiels nach Fig. 2 der Führungsschaft auf einen Schleifdorn mit Kegelzapfen aufgespannt und dort im gespannten Zustand unter Einstellung eines definierten Durchmesserführungsmaßes überschliffen wird. Alternativ dazu ist bei dem Ausführungsbeispiel nach Fig. 3 eine entsprechende Bearbeitung des auf den Schleifdorn aufgezogenen Reibkopfs 26 durchzuführen. Um reproduzierbare Ergebnisse zu erhalten, sind die Einspannbedingungen die gleichen wie beim Aufspannen des Reibkopfes 26 auf den Führungsschaft 16.

Zusammenfassend ist folgendes festzuhalten: Die Erfindung bezieht sich auf ein Reibwerkzeug zum Ausreiben von mehreren in axialem Abstand voneinander angeordneten Bohrungen 14 eines Werkstücks 12. Das Reibwerkzeug weist einen in eine Maschinenspindel einspannbaren, in vorbereiteten Bohrungen 14 des zu bearbeitenden Werkstücks 12 mittels außenseitiger Abstützelemente 18 abstützbaren Führungsschafts 16 und einen an dessen stimseitigem Ende koaxial anschließenden Reibkopf 26 auf. Um im Verschleißfalle einen einfachen Werkzeugwechsel zu ermöglichen, wird gemäß der Erfindung vorgeschlagen, daß der Reibkopf 26 mittels eines selbstzentrierenden Spannmechanismus 30 mit dem Führungsschaft 16 verbindbar ist und daß die in der Nähe des Spannmechanismus 30 positionierten Abstützelemente 18 beim Spannvorgang zumindest partiell von einem Durchmesseruntermaß auf ein vorgegebenes Durchmesserführungsmaß radial aufweitbar sind.

## Patentansprüche

1. Reibwerkzeug zum Ausreiben von mehreren in axialem Abstand voneinander angeordneten koaxialen Bohrungen eines Werkstücks mit einem in eine Maschinenspindel einspannbaren, in vorbearbeiteten Bohrungen (14) des zu bearbeitenden Werkstücks (12) und/oder in einer Führungsbüchse (20) mittels außenseitiger Abstützelemente (18) abstützbaren Führungsschaft (16) und mit einem an dessen stimseitigem Ende koaxial anschließenden, mit Schneiden (28) und gegebenenfalls zusätzlichen Abstützelementen versehenen Reibkopf (26), **dadurch gekennzeichnet, daß** der Reibkopf (26) mittels eines selbstzentriertenden Spannmechanismus (30) mit dem Führungsschaft (16) verbindbar ist und daß die in der Nähe des Spannmechanismus (30) positionierten Abstützelemente (18) beim Spannvorgang zumindest partiell von einem Durchmesseruntermaß auf ein vorgegebenes Durchmesserführungsmaß radial aufweitbar sind.

2. Reibwerkzeug nach Anspruch 1, **dadurch gekennzeichnet, daß** der selbstzentrierende Spannmechanismus (30) eine im Führungsschaft (16) konzentrisch angeordnete, durch eine ringförmige Planfläche (32) begrenzte Kegelaufnahme (34), einen rückwärtig über den Reibkopf (26) koaxial überstehenden, durch eine ringförmige Planfläche (36) begrenzten und in die Kegelaufnahme (34) einsteckbaren Kegelzapfen (38) sowie eine vom Reibkopf (26) aus in ein koaxiales Innengewinde (44) des Führungsschafts (16) eindrehbare Spannschraube (40) aufweist, wobei der Reibkopf (26) und der Führungsschaft (16) im Bereich ihrer Planflächen (32,36) im unverspannten Zustand ein definiertes Lehrenabstandsmaß (a) begrenzen und im vorgespannten Zustand unter elastischer Aufweitung der Kegelaufnahme (34) und der in diesem Bereich außenseitig angeordneten Abstützelemente (18) auf Führungsmaß gegeneinander anliegen.

3. Reibwerkzeug nach Anspruch 2, **dadurch gekennzeichnet, daß** der Führungsschaft (16) einen zwischen Kegelaufnahme (34) und ringförmiger Planfläche (32) angeordneten Innensechskant (46) aufweist, und daß der Reibkopf (26) einen zwischen dem Kegelzapfen (38) und der ringförmigen Planfläche (36) angeordneten, zum Innensechskant (46) komplementären Außensechskant (48) aufweist.

4. Reibwerkzeug nach Anspruch 1, **dadurch gekennzeichnet, daß** der selbstzentrierende Spannmechanismus (30) eine im Reibkopf (26) konzentrisch angeordnete, durch eine ringförmige Planfläche (36) begrenzte Kegelaufnahme (34'), einen nach vome über den Führungsschaft (16) koaxial überstehenden, durch eine ringförmige Planfläche (32) begrenzten und in die Kegelaufnahme (34') einsteckbaren Kegelzapfen (38') sowie eine vom Reibkopf (26) aus in ein koaxiales Innengewinde (44) des Führungsschafts (16) eindrehbare Spannschraube (40) aufweist, wobei der Reibkopf (26) und der Führungsschaft (16) im Bereich ihrer Planflächen (32,36) im unverspannten Zustand ein definiertes Lehrenabstandsmaß (a) begrenzen und im vorgespannten Zustand unter elastischer Aufweitung der Kegelaufnahme (34') und der in diesem Bereich außenseitig angeordneten Abstützelemente (18) auf Führungsmaß gegeneinander anliegen.

5. Reibwerkzeug nach Anspruch 4, **dadurch gekennzeichnet, daß** der Reibkopf (26) einen zwischen Kegelaufnahme (34') und ringförmiger Planfläche (36) angeordneten Innensechskant (46') aufweist, und daß der Führungsschaft (16) einen zwischen dem Kegelzapfen (38') und der ringförmigen Planfläche (32) angeordneten, zum Innensechskant (46') komplementären Außensechskant (48') aufweist.

6. Reibwerkzeug nach einem der Ansprüche 2 bis 5, **dadurch gekennzeichnet, daß** die Spannschraube (40) als in gegenläufige Innengewinde (42,44) des Reibkopfs (26) und des Führungsschafts (16) eingedrehte Differentialschraube ausgebildet ist.

7. Reibwerkzeug nach einem der Ansprüche 2 bis 6, **dadurch gekennzeichnet, daß** das Lehrenabstandsmaß (a) 0,01 bis 0,06 mm, vorzugsweise 0,02 bis 0,04 mm, beträgt.

8. Reibwerkzeug nach einem der Ansprüche 2 bis 7, **dadurch gekennzeichnet, daß** der Kegelwinkel des Kegelzapfens (38,38') und der Kegelaufnahme (34,34') 8° bis 16° beträgt.

9. Reibwerkzeug nach einem der Ansprüche 2 bis 8, **dadurch gekennzeichnet, daß** die Spannschraube im Spannzustand mit einem Anzugmoment von D = X + d verspannt ist, wobei X das Anzugmoment im Augenblick des Anschlags der Planflächen ist und d ein Zusatzdrehmoment von 0,4 bis 4 Nm zur Erzeugung eines Kraftschlusses bedeutet.

10. Reibwerkzeug nach einem der Ansprüche 1 bis 9, **dadurch gekennzeichnet, daß** die Abstützelemente als Führungsleisten (18) ausgebildet sind.

11. Reibwerkzeug nach Anspruch 10, **dadurch gekennzeichnet, daß** der Reibkopf (26) mehrere, vorzugsweise vier bis sechs über den Umfang vorzugsweise mit ungleicher Teilung verteilt angeordnete Schneiden (28) und der Führungsschaft (26) eine entsprechende Anzahl von über den Umfang verteilt angeordneten, achsparallel verlaufenden Führungsleisten (18) aufweist, wobei die Führungsleisten (18) in Umfangsrichtung jeweils versetzt gegen die räumlich zugeordneten Schneiden (28) angeordnet sind.

12. Reibwerkzeug nach einem der Ansprüche 2 bis 11, **dadurch gekennzeichnet, daß** die reibkopfseitige und die schaftseitige Planfläche (32,36) in Umfangsrichtung ununterbrochen sind.

13. Verfahren zur Herstellung eines Führungsschafts (16) für ein Reibwerkzeug nach einem der Ansprüche 2, 3, 6 bis 12, **dadurch gekennzeichnet, daß** der vorgefertigte, mit vorzugsweise als Führungsleisten ausgebildeten Abstützelementen (18) und mit einer stimseitigen Kegelaufnahme (34) versehene Führungsschaft (16) auf einen mit einem Kegelzapfen und einer den Kegelzapfen ringförmig begrenzenden Planfläche versehenen Schleifdorn aufgesteckt und mittels eines zentralen Spannmechanismus unter partieller radialer Aufweitung der schaftseitigen Abstützelemente (18) auf diesen aufgespannt, anschließend unter Einstellen eines vorgegebenen Durchmesserführungsmaßes überschliffen und wieder vom Schleifdom abgenommen wird.

14. Verfahren nach Anspruch 13, **dadurch gekennzeichnet, daß** der Führungsschaft unter Einhaltung eines vorgegebenen Lehrenabstandsmaßes von vorzugsweise 0,01 bis 0,06 mm auf den Kegelzapfen des Schleifdoms aufgesteckt und bis zum Anschlag mit definierter Spannkraft gegen dessen Planfläche angezogen wird.

15. Verfahren nach Anspruch 13 oder 14, **dadurch gekennzeichnet, daß** der Führungsschaft (16) mit einer Differentialschraube mit definiertem Anzugmoment auf den Kegelzapfen des Schleifdorns aufgespannt wird.

16. Verfahren zur Herstellung eines Reibkopfs (26) für ein Reibwerkzeug nach einem der Ansprüche 4 bis 12, **dadurch gekennzeichnet, daß** der vorgefertigte, mit vorzugsweise als Führungsleisten ausgebildeten Abstützelementen und mit einer rückwärtigen Kegelaufnahme (34') versehene Reibkopf (26) auf einen mit einem Kegelzapfen und einer den Kegelzapfen ringförmig begrenzenden Planfläche versehenen Schleifdorn aufgesteckt und mittels eines zentralen Spannmechanismus unter partieller radialer Aufweitung der reibkopfseitigen Abstützelemente auf diesen aufgespannt, anschließend unter Einstellung eines vorgegebenen Durchmesserführungsmaßes überschliffen und wieder vom Schleifdorn abgenommen wird.

17. Verfahren nach Anspruch 16, **dadurch gekennzeichnet, daß** der Reibkopf unter Einhaltung eines vorgegebenen Lehrenabstandsmaßes von vorzugsweise 0,01 bis 0,06 mm auf den Kegelzapfen des Schleifdoms aufgesteckt und bis zum Anschlag mit definierter Spannkraft gegen dessen Planfläche angezogen wird.

18. Verfahren nach einem der Ansprüche 13 bis 17, **dadurch gekennzeichnet, daß** der Reibkopf mit einer Differentialschraube mit definiertem Anzugmoment auf den Kegelzapfen des Schleifdorns aufgespannt wird.

19. Verfahren nach Anspruch 15 oder 18, **dadurch gekennzeichnet, daß** die Differentialschraube beim Spannvorgang zunächst mit einem Anzugmoment X bis zum Anschlag der Planflächen eingedreht wird und daß sodann ein Zusatzdrehmoment d von 0,4 bis 4 Nm zur Erzeugung eines Kraftschlusses aufgebracht wird.

## Claims

1. A reaming tool for reaming a plurality of coaxial bores of a workpiece which are arranged at an axial distance from one another, having a guide shank (16), which can be clamped in place in a machine spindle and can be supported by means of external supporting elements (18) in prepared bores (14) of the workpiece (12) to be machined and/or in a guide bush (20), and having a reaming head (26) coaxially adjoining the front end of the guide shank (16) and provided with cutting edges (28) and if need be additional supporting elements, **characterized in that** the reaming head (26) can be connected to the guide shank (16) by means of a self-centering clamping mechanism (30), and **in that** the supporting elements (18) positioned in the vicinity of the clamping mechanism (30) can be radially expanded during the clamping operation at least partly from a diameter undersize to a predetermined diameter guide dimension.

2. The reaming tool as claimed in claim 1, **characterized in that** the self-centering clamping mechanism (30) has a tapered receptacle (34) which is arranged concentrically in the guide shank (16) and is defined by an annular flat face (32), a tapered spigot (38) which projects coaxially rearward beyond the reaming head (26), is defined by an annular flat face (36) and can be inserted into the tapered receptacle (34), and a clamping screw (40) which can be screwed from the reaming head (26) into a coaxial internal thread (44) of the guide shank (16), the reaming head (26) and the guide shank (16), in the region of their flat faces (32, 36), in the state free of stress, limiting a defined gage clearance dimension (a) and, in the prestressed state, bearing against one another with the tapered receptacle (34) and the supporting elements (18) arranged on the outside in this region being expanded elastically to a guide dimension.

3. The reaming tool as claimed in claim 2, **characterized in that** the guide shank (16) has an internal hexagon (46) arranged between tapered receptacle (34) and annular flat face (32), and **in that** the reaming head (26) has an external hexagon (48) arranged between the tapered spigot (38) and the annular flat face (36) and complementary to the internal hexagon (46).

4. The reaming tool as claimed in claim 1, **characterized in that** the self-centering clamping mechanism (30) has a tapered receptacle (34') which is arranged concentrically in the reaming head (26) and is defined by an annular flat face (36), a tapered spigot (38') which projects coaxially forward beyond the guide shank (16), is defined by an annular flat face (32) and can be inserted into the tapered receptacle (34'), and a clamping screw (40) which can be screwed from the reaming head (26) into a coaxial internal thread (44) of the guide shank (16), the reaming head (26) and the guide shank (16), in the region of their flat faces (32, 36), in the state free of stress, limiting a defined gage clearance dimension (a) and, in the prestressed state, bearing against one another with the tapered receptacle (34') and the supporting elements (18) arranged on the outside in this region being expanded elastically to a guide dimension.

5. The reaming tool as claimed in claim 4, **characterized in that** the reaming head (26) has an internal hexagon (46') arranged between tapered receptacle (34') and annular flat face (36), and **in that** the guide shank (16) has an external hexagon (48') arranged between the tapered spigot (38') and the annular flat face (32) and complementary to the internal hexagon (46').

6. The reaming tool as claimed in one of claims 2 to 5, **characterized in that** the clamping screw (40) is designed as a differential screw screwed into opposing internal threads (42, 44) of the reaming head (26) and of the guide shank (16).

7. The reaming tool as claimed in one of claims 2 to 6, **characterized in that** the gage clearance dimension (a) is 0.01 to 0.06 mm, preferably 0.02 to 0.04 mm.

8. The reaming tool as claimed in one of claims 2 to 7, **characterized in that** the taper angle of the tapered spigot (38, 38') and of the tapered receptacle (34, 34') is 8° to 16°.

9. The reaming tool as claimed in one of claims 2 to 8, **characterized in that** the clamping screw, in the clamping state, is fastened with a tightening torque of D = X + d, in which case X denotes the tightening torque at the instant when the flat faces run against one another and d denotes an additional torque of 0.4 to 4 Nm for producing a frictional connection.

10. The reaming tool as claimed in one of claims 1 to 9, **characterized in that** the supporting elements are designed as guide strips (18).

11. The reaming tool as claimed in claim 10, **characterized in that** the reaming head (26) has several, preferably four to six, cutting edges (28) distributed over the circumference preferably at unequal spacing, and the guide shank (26) has a corresponding number of guide strips (18) distributed over the circumference and running in an axially parallel manner, the guide strips (18) being arranged in the circumferential direction such as to be offset in each case from the spatially associated cutting edges (28).

12. The reaming tool as claimed in one of claims 2 to 11, **characterized in that** the flat faces (32, 36) on the reaming-head side and the shank side are continuous in the circumferential direction.

13. A method of producing a guide shank (16) for a reaming tool as claimed in one of claims 2, 3, 6 to 12, **characterized in that** the pre-machined guide shank (16), provided with supporting elements (18), preferably designed as guide strips, and with a front-end tapered receptacle (34), is slipped onto a grinding arbor provided with a tapered spigot and a flat face defining the tapered spigot in an annular manner and is clamped in place on this grinding arbor by means of a central clamping mechanism with the shank side supporting elements (18) being partly expanded radially, and is then ground on the outside diameter, with a predetermined diameter guide dimension being set, and is removed again from the grinding arbor.

14. The method as claimed in claim 13, **characterized in that** the guide shank, with a predetermined gage clearance dimension of preferably 0.01 to 0.06 mm being maintained, is put onto the tapered spigot of the grinding arbor and is tightened up to the stop with a defined clamping force against its flat face.

15. The method as claimed in claim 13 or 14, **characterized in that** the guide shank (16) is clamped in place on the tapered spigot of the grinding arbor with a defined tightening torque by means of a differential screw.

16. A method of producing a reaming head (26) for a reaming tool as claimed in one of claims 4 to 12, **characterized in that** the pre-machined reaming head (26), provided with supporting elements, preferably designed as guide strips, and with a rear tapered receptacle (34'), is slipped onto a grinding arbor provided with a tapered spigot and a flat face defining the tapered spigot in an annular manner and is clamped in place on this grinding arbor by means of a central clamping mechanism with the reaming-head-side supporting elements being partly expanded radially, and is then ground on the outside diameter, with a predetermined diameter guide dimension being set, and is removed again from the grinding arbor.

17. The method as claimed in claim 16, **characterized in that** the reaming head, with a predetermined gage clearance dimension of preferably 0.01 to 0.06 mm being maintained, is put onto the tapered spigot of the grinding arbor and is tightened up to the stop with a defined clamping force against its flat face.

18. The method as claimed in one of claims 13 to 17, **characterized in that** the reaming head is clamped in place on the tapered spigot of the grinding arbor with a defined tightening torque by means of a differential screw.

19. The method as claimed in claim 15 or 18, **characterized in that** the differential screw, during the clamping operation, is first of all screwed in with a tightening torque X until the flat faces run against one another, and **in that** an additional torque d of 0.4 to 4 Nm is then applied for producing a frictional connection.

## Revendications

1. Outil d'alésage pour aléser à la cote plusieurs perçages coaxiaux d'une pièce qui sont disposés à distance axiale les uns des autres, avec une tige de guidage (16) qui peut être serrée dans une broche de machine-outil et qui, au moyen d'éléments de soutien extérieurs (18), peut s'appuyer dans des perçages préusinés (14) de la pièce (12) à usiner et/ou dans une douille de guidage (20), et avec une tête d'alésage (26) qui se raccorde coaxialement à l'extrémité avant de la tige et qui est pourvue de tranchants (28) et éventuellement d'éléments de soutien supplémentaires, **caractérisé en ce que** la tête d'alésage (26) peut être reliée à la tige de guidage (16) au moyen d'un mécanisme de serrage autocentreur (30), et **en ce que** les éléments de soutien (18) positionnés dans le voisinage du mécanisme de serrage (30) peuvent, lors du serrage, être élargis radialement au moins partiellement d'une sous-cote de diamètre à une cote prédéfinie de diamètre de guidage.

2. Outil d'alésage selon la revendication 1, **caractérisé en ce que** le mécanisme de serrage autocentreur (30) présente un logement conique (34) disposé concentriquement dans la tige de guidage (16) et délimité par une face plane annulaire (32), un tenon conique (38) dépassant coaxialement de la tête d'alésage (26) du côté arrière, délimité par une face plane annulaire (36) et pouvant être emboîté dans le logement conique (34), et une vis de serrage (40) pouvant être vissée depuis la tête d'alésage (26) dans un filetage intérieur coaxial (44) de la tige de guidage (16), sachant que la tête d'alésage (26) et la tige de guidage (16), dans l'état non serré, délimitent dans la région de leurs faces planes (32, 36) une cote définie (a) d'espacement de référence et, dans l'état précontraint, s'appliquent l'une contre l'autre avec élargissement élastique à la cote de guidage du logement conique (34) et des éléments de soutien (18) disposés du côté extérieur dans cette région.

3. Outil d'alésage selon la revendication 2, **caractérisé en ce que** la tige de guidage (16) présente un six pans creux (46) disposé entre le logement conique (34) et la face plane annulaire (32), et **en ce que** la tête d'alésage (26) présente un six pans mâle (48) disposé entre le tenon conique (38) et la face plane annulaire (36) et complémentaire du six pans creux (46).

4. Outil d'alésage selon la revendication 1, **caractérisé en ce que** le mécanisme de serrage autocentreur (30) présente un logement conique (34') disposé concentriquement dans la tête d'alésage (26) et délimité par une face plane annulaire (36), un tenon conique (38') dépassant coaxialement de la tige de guidage (16) vers l'avant, délimité par une face plane annulaire (32) et pouvant être emboîté dans le logement conique (34'), et une vis de serrage (40) pouvant être vissée depuis la tête d'alésage (26) dans un filetage intérieur coaxial (44) de la tige de guidage (16), sachant que la tête d'alésage (26) et la tige de guidage (16), dans l'état non serré, délimitent dans la région de leurs faces planes (32, 36) une cote définie (a) d'espacement de référence et, dans l'état précontraint, s'appliquent l'une contre l'autre avec élargissement élastique à la cote de guidage du logement conique (34') et des éléments de soutien (18) disposés du côté extérieur dans cette région.

5. Outil d'alésage selon la revendication 4, **caractérisé en ce que** la tête d'alésage (26) présente un six pans creux (46') disposé entre le logement conique (34') et la face plane annulaire (36), et **en ce que** la tige de guidage (16) présente un six pans mâle (48') disposé entre le tenon conique (38') et la face plane annulaire (32) et complémentaire du six pans creux (46').

6. Outil d'alésage selon l'une des revendications 2 à 5, **caractérisé en ce que** la vis de serrage (40) est réalisée sous forme de vis différentielle vissée dans des filetages intérieurs (42, 44) en sens contraires de la tête d'alésage (26) et de la tige de guidage (16).

7. Outil d'alésage selon l'une des revendications 2 à 6, **caractérisé en ce que** la cote d'espacement de référence (a) est comprise entre 0,01 et 0,06 mm, de préférence entre 0,02 et 0,04 mm.

8. Outil d'alésage selon l'une des revendications 2 à 7, **caractérisé en ce que** l'angle de cône du tenon conique (38, 38') et du logement conique (34, 34') est compris entre 8° et 16°.

9. Outil d'alésage selon l'une des revendications 2 à 8, **caractérisé en ce que** la vis de serrage est, dans l'état de serrage, serrée avec un couple de serrage D = X + d, où X est le couple de serrage à l'instant de l'entrée en butée des faces planes et où d est un couple additionnel de 0,4 à 4 Nm pour produire une liaison par adhérence.

10. Outil d'alésage selon l'une des revendications 1 à 9, **caractérisé en ce que** les éléments de soutien sont réalisés sous la forme de barrettes de guidage (18).

11. Outil d'alésage selon la revendication 10, **caractérisé en ce que** la tête d'alésage (26) présente plusieurs tranchants (28), de préférence quatre à six tranchants (28) disposés en étant répartis sur la circonférence de préférence avec un espacement inégal, et la tête d'alésage (26) présente un nombre correspondant de barrettes de guidage (18) s'étendant avec des axes parallèles en étant réparties sur la circonférence, sachant que les barrettes de guidage (18) sont disposées en étant respectivement décalées en direction circonférentielle par rapport aux tranchants (28) spatialement associés.

12. Outil d'alésage selon l'une des revendications 2 à 11, **caractérisé en ce que** les faces planes (32, 36) de la tête d'alésage et de la tige sont ininterrompues en direction circonférentielle.

13. Procédé de fabrication d'une tige de guidage (16) pour un outil d'alésage selon l'une des revendications 2, 3, 6 à 12, **caractérisé en ce que** la tige de guidage préfabriquée (16), pourvue d'éléments de soutien (18) réalisés de préférence sous forme de barrettes de guidage et d'un logement conique (34) du côté frontal, est enfilée sur un mandrin de meulage pourvu d'un tenon conique et d'une face plane délimitant annulairement le tenon conique et, au moyen d'un mécanisme de serrage central, est serrée sur ce mandrin avec élargissement radial partiel des éléments de soutien (18) côté tige, puis est ajustée par meulage en réglant une cote prédéfinie de diamètre de guidage, et est retirée du mandrin de meulage.

14. Procédé selon la revendication 13, **caractérisé en ce que** la tige de guidage est enfilée sur le tenon conique du mandrin de meulage en respectant une cote prescrite d'espacement de référence comprise de préférence entre 0,01 et 0,06 mm et est, avec une force de serrage définie, serrée jusqu'en butée contre la face plane de ce tenon.

15. Procédé selon la revendication 13 ou 14, **caractérisé en ce que** la tige de guidage (16) est, au moyen d'une vis différentielle, serrée avec un couple de serrage défini sur le tenon conique du mandrin de meulage.

16. Procédé de fabrication d'une tête d'alésage (26) pour un outil d'alésage selon l'une des revendications 4 à 12, **caractérisé en ce que** la tête d'alésage préfabriquée (26), pourvue d'éléments de soutien réalisés de préférence sous forme de barrettes de guidage et d'un logement conique (34') du côté arrière, est enfilée sur un mandrin de meulage pourvu d'un tenon conique et d'une face plane délimitant annulairement le tenon conique et, au moyen d'un mécanisme de serrage central, est serrée sur ce mandrin avec élargissement radial partiel des éléments de soutien côté tête d'alésage, puis est ajustée par meulage en réglant une cote prédéfinie de diamètre de guidage, et est retirée du mandrin de meulage.

17. Procédé selon la revendication 16, **caractérisé en ce que** la tête d'alésage est enfilée sur le tenon conique du mandrin de meulage en respectant une cote prescrite d'espacement de référence comprise de préférence entre 0,01 et 0,06 mm et est, avec une force de serrage définie, serrée jusqu'en butée contre la face plane de ce tenon.

18. Procédé selon l'une des revendications 13 à 17, **caractérisé en ce que** la tête d'alésage est, au moyen d'une vis différentielle, serrée avec un couple de serrage défini sur le tenon conique du mandrin de meulage.

19. Procédé selon la revendication 15 ou 18, **caractérisé en ce que** la vis différentielle est, lors du serrage, d'abord serrée avec un couple de serrage X jusqu'à l'entrée en butée des faces planes et, **en ce qu'**on applique ensuite un couple additionnel d de 0,4 à 4 Nm pour produire une liaison par adhérence.
